# EUROPEAN PATENT APPLICATION

(11) **EP 4 307 325 A1**
(43) Date of publication of application: **17.01.2024**
(21) Application number: 22766077.6
(22) Date of filing: 17.01.2022
(51) Int. Cl.: H01F 1/057, H01F 1/058, C22C 38/06, C22C 38/10, C22C 38/12, C22C 38/14, C22C 38/16, H01F 41/02, C22C 33/02

(54) **MAIN AND AUXILIARY ALLOY-BASED NEODYMIUM-IRON-BORON MAGNET MATERIAL AND PREPARATION METHOD THEREFOR**

(30) Priority: 10.03.2021 CN 202110261268
(71) Applicant: Fujian Changting Golden Dragon Rare-Earth Co., Ltd., Fujian 366300 (CN)
(72) Inventor: WEI, Xing, Longyan, Fujian 366300 (CN); HUANG, Jiaying, Xiamen, Fujian 361000 (CN); TANG, Zhihui, Longyan, Fujian 366300 (CN); HUANG, Qingfang, Longyan, Fujian 366300 (CN); JIANG, Zhipeng, Xiamen, Fujian 361000 (CN); XU, Deqin, Longyan, Fujian 366300 (CN); CHEN, Dakun, Longyan, Fujian 366300 (CN); FU, Gang, Longyan, Fujian 366300 (CN)
(74) Representative: karo IP
(86) International application number: PCT/CN2022/072244
(87) International publication number: WO 2022/188550

(57) **Abstract**

The invention discloses a main and auxiliary alloy-based neodymium-iron-boron magnet material and the preparation method thereof. The raw material composition for the main and auxiliary alloy-based neodymium-iron-boron magnet material of the invention comprises a main alloy raw material and an auxiliary alloy raw material, wherein the mass percentage of the auxiliary alloy raw material in the raw material composition for the main and auxiliary alloy-based neodymium-iron-boron magnet material is 1.0-15.0 mass%. For the main and auxiliary alloy-based neodymium-iron-boron magnet material prepared by using the raw material composition, the coercivity is increased while high remanence is ensured, and the preparation method therefor can be suitable for engineering application.

## Description

### FIELD OF THE INVENTION

The invention relates to a main and auxiliary alloy-based neodymium-iron-boron magnet material and the preparation method thereof.

### BACKGROUND OF THE INVENTION

The neodymium-iron-boron magnets have attracted much attention as the permanent magnets with the largest magnetic energy product at room temperature, which are widely used in the fields of traction motors, servo motors, main drive motors for new energy vehicles, magnetic components, wind turbines and the like. However, the anti-demagnetization ability of commercial magnets is only 1/4 of the theoretical value (about 71KOe). The anti-demagnetization ability of neodymium-iron-boron is generally characterized by coercivity. The magnitude of the coercivity is greatly affected by the microstructure of neodymium-iron-boron, and at the same time, it is controlled by two mechanisms of nucleation field and pinning field. The nucleation field is dominant, and the way for the nucleation field to increase HcJ is to eliminate the reverse domain nucleation points. From a microscopic point of view, there are generally the following three ways to improve the coercivity:
1) Improving the demagnetic coupling ability of the grain boundary phase between the main phases, and the specific method is to introduce Nd₆Fe₁₃X in the main phase to absorb Fe in the grain boundary, so that the grain boundary phase transitions to a non-magnetic phase or an antiferromagnetic phase, and at the same time, widen the grain boundary; or, increasing the grain boundary phase volume by increasing the total rare earth content; or, adding the grain boundary elements such as Cu, Ga, Co, Al and the like to improve the fluidity of the neodymium-rich phase, optimize the grain boundary of the main phase, so as to repair the defects in the main phase, reduce the formation of reverse domains, and increase the HcJ. The HcJ improved by such methods is limited, and it is difficult to increase the HcJ to 25kOe or more.
2) Refining the grains to reduce the reverse domain nucleation points of the main phase grains. The closer to the single domain size, the harder it is for the reverse domain to form; or forming the grain boundary phases such as Nd₆Fe₁₃X to ablate the sharp angles of the main phase particles, so that the grain boundaries of the main phases become smooth to reduce reverse nucleation points. These methods may effectively improve the HcJ, and the HcJ of the magnets prepared by the thin film method can reach 29 kOe, but these methods are difficult to apply engineeringly.
3) Increasing the anisotropy field of the main phase by adding heavy rare earths. However, the low reserves and high price of heavy rare earth resources seriously restrict the application of neodymium-iron-boron magnets in various industries. Usually, double alloy methods or diffusion methods are adopted to distribute the heavy rare earth in the outer layer of the main phase, which improves the utilization rate of the heavy rare earth. However, the diffusion methods cannot be applied to magnets having a large thickness (> 15mm), and the improving effect brought by the existing double alloy methods is limited (the HcJ can be increased by about 1-1.5 kOe).

### SUMMARY OF THE INVENTION

In order to solve the defect relating to low coercivity of the neodymium-iron-boron magnets prepared by the double alloy methods in the prior art, the present invention provides a main and auxiliary alloy-based neodymium-iron-boron magnet material and the preparation method thereof. For the main and auxiliary alloy-based neodymium-iron-boron magnet material of the invention, the coercivity is increased while high remanence is ensured, and the preparation method therefor can be suitable for engineering application.

The present invention achieves the above-mentioned object through the following technical solutions.

The invention provides a raw material composition for a main and auxiliary alloy-based neodymium-iron-boron magnet material, comprising a main alloy raw material and an auxiliary alloy raw material, wherein:
the main alloy raw material comprises the following components of: 10.0-33.0 mass% of a light rare earth element LR, wherein the LR is one or more selected from the group consisting of Y, La, Ce, Pr and Nd; 0-20.0 mass% of a heavy rare earth element HR, wherein the HR is one or more selected from the group consisting of Gd, Dy, Tb and Ho; 0.1-5.0 mass% of M, wherein the M is one or more selected from the group consisting of Co, Cu, Al and Ga; 0.05-0.7 mass% of X, wherein the X is one or more selected from the group consisting of Zr, Ti and Nb; 0.94-1.1 mass % of B; and Fe as the balance, wherein the mass% refers to the mass percentage of the component in the main alloy raw material,
the auxiliary alloy raw material comprises the following components of: 0-30.0 mass% of a light rare earth element LR, wherein the LR is Nd and/or Pr; 1-80 mass% of a heavy rare earth element HR, wherein the HR is Dy and/or Tb; 5.0-20.0 mass% of M, wherein the M is one or more selected from the group consisting of Co, Cu, Al and Ga; 3.0-12.0 mass% of X, wherein the X is one or more selected from the group consisting of Ti, Zr, Hf, Nb, W and Ta; 0-0.6 mass % of B; and Fe as the balance, wherein the mass% refers to the mass percentage of the component in the auxiliary alloy raw material; and
the mass percentage of the auxiliary alloy raw material in the raw material composition for the main and auxiliary alloy-based neodymium-iron-boron magnet material is 1.0-15.0 mass%.

In the invention, preferably, the main alloy raw material has a total rare earth content TRE of 26.0-40.0 mass%, preferably 29.0-32.0 mass%, for example, 29.5 mass%, 30.5 mass% or 31.5 mass%, wherein the mass% refers to the mass percentage of the component in the main alloy raw material.

In the invention, in the main alloy raw material, the content of LR is 25.0-30.0 mass%, for example, 25.2 mass%, 29.5 mass% or 30 mass%, wherein the mass% refers to the mass percentage of the component in the main alloy raw material.

In the invention, in the main alloy raw material, when the LR comprises Nd, the content of Nd is 18.9-22.5 mass%, such as 22.125 mass%, wherein the mass% refers to the mass percentage of the component in the main alloy raw material.

In the invention, in the main alloy raw material, when the LR comprises Pr, the content of Pr is 6.0-7.5 mass%, such as 6.3 mass% or 7.375 mass%, wherein the mass% refers to the mass percentage of the component in the main alloy raw material.

Preferably, in the main alloy raw material, the LR comprises Nd and Pr. More preferably, the content of Nd is 22.125 mass%, and the content of Pr is 7.375 mass%; or, the content of Nd is 22.5 mass%, and the content of Pr is 7.5 mass%; or, the content of Nd is 18.9 mass%, and the content of Pr is 6.3 mass%, wherein the mass% refers to the mass percentage of the component in the main alloy raw material.

In the invention, in the main alloy raw material, the content of the HR is 1.0-10.0 mass%, for example, 1.5 mass% or 5.3 mass%, wherein the mass% refers to the mass percentage of the component in the main alloy raw material.

In the invention, in the main alloy raw material, when the HR comprises Dy, the content of Dy is 1.0-5.0 mass%, for example, 1.5 mass% or 4.3 mass%. Preferably, in the main alloy raw material, the HR is Dy; the content of Dy is preferably 1.5 mass%, wherein the mass% refers to the mass percentage of the component in the main alloy raw material.

In the invention, in the main alloy raw material, when the HR comprises Ho, the content of Ho is 0.5-2.0 mass%, for example, 1.0 mass%, wherein the mass% refers to the mass percentage of the component in the main alloy raw material.

Preferably, in the main alloy raw material, the HR comprises Dy and Ho, wherein the content of Dy is preferably 4.3 mass%, and the content of Ho is preferably 1.0 mass%, wherein the mass% refers to the mass percentage of the component in the main alloy raw material.

In the invention, in the main alloy raw material, the content of M is 0.5-2.0 mass%, for example, 0.88 mass%, 1.5 mass% or 1.65 mass%, wherein the mass% refers to the mass percentage of the component in the main alloy raw material.

In the invention, in the main alloy raw material, when the M comprises Ga, the content of Ga is 0.2-0.4 mass%, for example, 0.25 mass%, wherein the mass% refers to the mass percentage of the component in the main alloy raw material.

In the invention, in the main alloy raw material, when the M contains Al, the content of Al is 0.01-0.1 mass%, for example, 0.03 mass%, wherein the mass% refers to the mass percentage of the component in the main alloy raw material.

In the invention, in the main alloy raw material, when the M contains Cu, the content of Cu is 0.1-0.25 mass%, for example, 0.15 mass%, wherein the mass% refers to the mass percentage of the component in the main alloy raw material.

In the invention, in the main alloy raw material, when the M contains Co, the content of Co is 0.5-1.0 mass%, wherein the mass% refers to the mass percentage of the component in the main alloy raw material.

Preferably, in the main alloy raw material, the M comprises Ga, Al, Cu and Co, wherein, the content of Ga is preferably 0.25 mass%, the content of Al is preferably 0.03 mass%, the content of Cu is preferably 0.1 mass%, and the content of Co is preferably 0.5 mass%, wherein the mass% refers to the mass percentage of the component in the main alloy raw material.

In the invention, in the main alloy raw material, the content of X is 0.1-0.35 mass%, for example, 0.11 mass% or 0.15 mass%, wherein the mass% refers to the mass percentage of the component in the main alloy raw material. Preferably, in the main alloy raw material, the X is Zr or Ti.

In the invention, in the main alloy raw material, the content of B is 0.97-0.99 mass%, for example, 0.98 mass%, wherein the mass% refers to the mass percentage of the component in the main alloy raw material.

In a preferable embodiment, the main alloy raw material comprises the following components of: 22.125 mass% of Nd; 7.375 mass% of Pr; 0.25 mass% of Ga; 0.03 mass% of Al; 0.1 mass% of Cu; 0.5 mass% of Co; 0.11 mass% of Zr; 0.98 mass% of B; and Fe as the balance, wherein the mass% refers to the mass percentage of the component in the main alloy raw material.

In a preferable embodiment, the main alloy raw material comprises the following components of: 22.5 mass% of Nd; 7.5 mass% of Pr; 1.5 mass% of Dy; 0.4 mass% of Ga; 0.25 mass% of Cu; 1.0 mass% of Co; 0.35 mass% of Zr; 0.97 mass% of B; and Fe as the balance, wherein the mass% refers to the mass percentage of the component in the main alloy raw material.

In a preferable embodiment, the main alloy raw material comprises the following components of: 18.9 mass% of Nd; 6.3 mass% of Pr; 4.3 mass% of Dy; 1.0 mass% of Ho; 0.25 mass% of Ga; 0.1 mass% of Al; 0.15 mass% of Cu; 1.0 mass% of Co; 0.15 mass% of Ti; 0.97 mass% of B; and Fe as the balance, wherein the mass% refers to the mass percentage of the component in the main alloy raw material.

In the invention, the auxiliary alloy raw material has a total rare earth content TRE of 35.0-50.0 mass%, preferably 40.0-45.0 mass%, wherein the mass% refers to the mass percentage of the component in the auxiliary alloy raw material.

In the invention, in the auxiliary alloy raw material, the content of LR is preferably 20.0-30.0 mass%, for example, 25.0 mass%, wherein the mass% refers to the mass percentage of the component in the auxiliary alloy raw material.

In the invention, in the auxiliary alloy raw material, when the LR comprises Nd, the content of Nd is 10.0-20.0 mass%, for example, 15.0 mass%, wherein the mass% refers to the mass percentage of the component in the auxiliary alloy raw material.

In the invention, in the auxiliary alloy raw material, when the LR comprises Pr, the content of Pr is 15.0-25.0 mass%, for example, 20.0 mass%, wherein the mass% refers to the mass percentage of the component in the auxiliary alloy raw material.

Preferably, in the auxiliary alloy raw material, the LR is Nd and Pr, the content of Nd is 15.0 mass%, and the content of Pr is 15.0 mass%, wherein the mass% refers to the mass percentage of the component in the auxiliary alloy raw material.

In the invention, in the auxiliary alloy raw material, the content of HR is preferably 15.0-20.0 mass%, wherein the mass% refers to the mass percentage of the component in the auxiliary alloy raw material.

Preferably, in the auxiliary alloy raw material, the HR is Tb, and the content of Tb is 15.0 mass%, wherein the mass% refers to the mass percentage of the component in the auxiliary alloy raw material.

Preferably, in the auxiliary alloy raw material, the HR is Dy, and the content of Dy is 20.0 mass%, wherein the mass% refers to the mass percentage of the component in the auxiliary alloy raw material.

In the invention, in the auxiliary alloy raw material, when the M comprises Ga, the content of Ga is preferably 2.0-10.0 mass%, for example, 5.0 mass%, wherein the mass% refers to the mass percentage of the component in the auxiliary alloy raw material.

In the invention, in the auxiliary alloy raw material, when the M comprises Co, the content of Co is preferably 10.0-20.0 mass%, for example, 15.0 mass%, wherein the mass% refers to the mass percentage of the component in the auxiliary alloy raw material.

Preferably, in the auxiliary alloy raw material, the M is Ga and Co; wherein, the content of Ga is preferably 5.0 mass%, the content of Co is preferably 15.0 mass%, wherein the mass% refers to the mass percentage of the component in the auxiliary alloy raw material.

In the invention, in the auxiliary alloy raw material, the content of X is preferably 4.0-10.0 mass%, for example, 4.5 mass% or 5.0 mass%, wherein the mass% refers to the mass percentage of the component in the auxiliary alloy raw material; preferably, in the auxiliary alloy raw material, the X is Zr.

In the invention, in the auxiliary alloy raw material, the content of B is 0.3-0.6 mass%, for example, 0.4 mass% or 0.5 mass%, wherein the mass% refers to the mass percentage of the component in the auxiliary alloy raw material.

In a preferable embodiment, the auxiliary alloy raw material comprises the following components of: 15.0 mass% of Nd; 15.0 mass% of Pr; 15.0 mass% of Tb; 10.0 mass% of Zr; 0.5 mass% of B; and Fe as the balance, wherein the mass% refers to the mass percentage of the component in the auxiliary alloy raw material.

In a preferable embodiment, the auxiliary alloy raw material comprises the following components of: 25.0 mass% of Pr; 20.0 mass% of Dy; 4.5 mass% of Zr; 0.5 mass% of B; and Fe as the balance, wherein the mass% refers to the mass percentage of the component in the auxiliary alloy raw material.

In a preferable embodiment, the auxiliary alloy raw material comprises the following components of: 20.0 mass% of Pr; 20.0 mass% of Dy; 5.0 mass% of Ga; 15.0 mass% of Co; 5.0 mass% of Zr; 0.4 mass% of B; and Fe as the balance, wherein the mass% refers to the mass percentage of the component in the auxiliary alloy raw material.

In the invention, the mass percentage of the auxiliary alloy raw material in the raw material composition for a main and auxiliary alloy-based neodymium-iron-boron magnet material is preferably 2.0-5.0 mass%, for example, 4.0 mass%.

In a more preferable embodiment, the raw material composition for a main and auxiliary alloy-based neodymium-iron-boron magnet material comprises a main alloy raw material and an auxiliary alloy raw material, wherein: the main alloy raw material comprises the following components of: 22.125 mass% of Nd; 7.375 mass% of Pr; 0.25 mass% of Ga; 0.03 mass% of Al; 0.1 mass% of Cu; 0.5 mass% of Co; 0.11 mass% of Zr; 0.98 mass% of B; and Fe as the balance, wherein the mass% refers to the mass percentage of the component in the main alloy raw material; the auxiliary alloy raw material comprises the following components of: 15.0 mass% of Nd; 15.0 mass% of Pr; 15.0 mass% of Tb; 10.0 mass% of Zr; 0.5 mass% of B; and Fe as the balance, wherein the mass% refers to the mass percentage of the component in the auxiliary alloy raw material; and the mass percentage of the auxiliary alloy raw material in the raw material composition for a main and auxiliary alloy-based neodymium-iron-boron magnet material is 4.0 mass%.

In a more preferable embodiment, the raw material composition for a main and auxiliary alloy-based neodymium-iron-boron magnet material comprises a main alloy raw material and an auxiliary alloy raw material, wherein: the main alloy raw material comprises the following components of: 22.5 mass% of Nd; 7.5 mass% of Pr; 1.5 mass% of Dy; 0.4 mass% of Ga; 0.25 mass% of Cu; 1.0 mass% of Co; 0.35 mass% of Zr; 0.97 mass% of B; and Fe as the balance, wherein the mass% refers to the mass percentage of the component in the main alloy raw material; the auxiliary alloy raw material comprises the following components of: 25.0 mass% of Pr; 20.0 mass% of Dy; 4.5 mass% of Zr; 0.5 mass% of B; and Fe as the balance, wherein the mass% refers to the mass percentage of the component in the auxiliary alloy raw material; and the mass percentage of the auxiliary alloy raw material in the raw material composition for a main and auxiliary alloy-based neodymium-iron-boron magnet material is 5.0 mass%.

In a more preferable embodiment, the raw material composition for a main and auxiliary alloy-based neodymium-iron-boron magnet material comprises a main alloy raw material and an auxiliary alloy raw material, wherein: the main alloy raw material comprises the following components of: 18.9 mass% of Nd; 6.3 mass% of Pr; 4.3 mass% of Dy; 1.0 mass% of Ho; 0.25 mass% of Ga; 0.1 mass% of Al; 0.15 mass% of Cu; 1.0 mass% of Co; 0.2 mass% of Zr; 0.97 mass% of B; and Fe as the balance, wherein the mass% refers to the mass percentage of the component in the main alloy raw material; the auxiliary alloy raw material comprises the following components of: 20.0 mass% of Pr; 20.0 mass% of Dy; 5.0 mass% of Ga; 15.0 mass% of Co; 5.0 mass% of Zr; 0.4 mass% of B; and Fe as the balance, wherein the mass% refers to the mass percentage of the component in the auxiliary alloy raw material; and the mass percentage of the auxiliary alloy raw material in the raw material composition for a main and auxiliary alloy-based neodymium-iron-boron magnet material is 4.0 mass%.

The invention further provides a preparation method of a main and auxiliary alloy-based neodymium-iron-boron magnet material, comprising the following steps of:
S1: subjecting the main alloy raw material and the auxiliary alloy raw material in the raw material composition for a main and auxiliary alloy-based neodymium-iron-boron magnet material to smelting and then casting respectively, to obtain a main alloy and an auxiliary alloy respectively;
S2: subjecting the main alloy and the auxiliary alloy to hydrogen decrepitation and pulverization respectively, mixing the pulverized main alloy and the auxiliary alloy to produce a mixture, and shaping and sintering the mixture, to obtain the main and auxiliary alloy-based neodymium-iron-boron magnet material.

In the present invention, the smelting, the casting, the hydrogen decrepitation, the pulverization, the shaping, and the sintering are all the conventional operation methods using conventional conditions in the field.

In the present invention, the smelting can be performed according to the conventional smelting methods in the art, the smelting is carried out in a smelting furnace. The smelting furnace having a vacuum degree of about 5×10⁻² Pa. The smelting temperature can be 1300°C-1600°C, preferably 1500°C-1550°C

In the present invention, the casting process can be a conventional casting process in the art, for example, a strip continuous casting process, an ingot casting process, a centrifugal casting process, or a rapid quenching process.

In the present invention, the process for hydrogen decrepitation can be a traditional process in the field. The hydrogen decrepitation has a dehydrogenation temperature which can be 400°C-650°C, for example, 500-620°C.

In the invention, the process for pulverization can be the traditional pulverization process in the field. The pulverization is preferably carried out in a jet mill. The pulverization is preferably carried out in an oxygen-containing atmosphere, wherein the oxygen content in the oxygen-containing atmosphere can be 80 ppm or less, preferably 50 ppm or less. The particles after the pulverization have a diameter of 1-20 µm.

In the invention, the conditions for the shaping can be traditional in the field, for example, the shaping comprises pressing into a green compact in a press. The magnetic field strength in the press is preferably 0.5T-3.0T, for example, 1.0-2.0T. The pressing pressure can be 200-300 MPa, for example, 260 MPa. The pressing time can be traditional in the field, which can be 3-30s, for example, 15s.

In the invention, the conditions for the sintering can be traditional in the field. The temperature for the sintering can be 1000°C-1150°C, preferably, 1060-1090°C. The time for the sintering can be 4-20 hours. The atmosphere for the sintering is preferably vacuum or argon atmosphere.

The invention further provides a main and auxiliary alloy-based neodymium-iron-boron magnet material prepared according to the preparation method of a main and auxiliary alloy-based neodymium-iron-boron magnet material.

In the invention, the main and auxiliary alloy-based neodymium-iron-boron magnet material comprises a main phase and a grain boundary phase, wherein the main phase is a core-shell structure, wherein: the core is LR₂T₁₄B, and the shell is HR₂T₁₄B; the grain boundary phase comprises a neodymium-rich phase, a XB₂ phase and a R₆T₁₃M phase;
wherein R is LR and/or HR;
LR is one or more selected from the group consisting of Y, La, Ce, Pr, and Nd;
HR is one or more selected from the group consisting of Gd, Dy, Tb and Ho;
M is one or more selected from the group consisting of Cu, Al and Ga;
X is one or more selected from the group consisting of Ti, Zr, Hf, Nb, W and Ta; and
T is Fe and/or Co.

Preferably, in the main and auxiliary alloy-based neodymium-iron-boron magnet material, LR is Pr and Nd; HR is Tb; M is Cu, Al and Ga; X is Zr; and T is Fe and Co.

Preferably, in the main and auxiliary alloy-based neodymium-iron-boron magnet material, LR is Pr and Nd; HR is Dy; M is Cu and Ga; X is Zr; and T is Fe and Co.

Preferably, in the main and auxiliary alloy-based neodymium-iron-boron magnet material, LR is Pr and Nd; HR is Dy and Ho; M is Cu, Al and Ga; X is Ti; T is Fe and Co.

In the present invention, the main alloy provides a LR₂Fe₁₄B main phase and a certain neodymium-rich phase, while the auxiliary alloy provides HR as a diffusion source. During the sintering process, HR in the auxiliary alloy diffuses to the surface of the main phase particles through the molten neodymium-rich phase, replacing LR in the main phase particles, thereby forming a heavy rare earth shell layer HR₂Fe₁₄B on the surface of the main phase. The B having low content in the auxiliary alloy exists in the form of a solid solution, thereby reducing the existence of HR₂T₁₄B, making it easier for HR to form a shell on the outer edge of the main phase particles during the mixing process, thereby improving the utilization efficiency of HR. At the same time, the B having low content makes the auxiliary alloy sheets easier to break, which facilitates the normal operation of the smelting equipment and facilitates the next step of hydrogen decrepitation. Upon the main alloy and the auxiliary alloy are mixed and heat treated, the X element in the neodymium-rich phase combines with B to form a precipitate XB₂ at high temperature, and Fe in the original R-Fe-X and Fe-X is released, thereby improving the fluidity of the neodymium-rich phase, promoting the formation of the R₆T₁₃M phase (a tetragonal phase, which is a non-magnetic phase or an anti-magnetic phase) from M elements and the like, thereby improving the intrinsic coercivity (HcJ) of the magnet while ensuring high remanence (Br).

On the basis of conforming to common knowledge in the field, the above-mentioned preferred conditions can be combined arbitrarily to obtain the preferred examples of the present invention.

The reagents and raw materials used in the present invention are all commercially available.

The positive effect of the present invention is as follows.

In the present invention, by constructing the combination of main and auxiliary alloys and combining the specific raw material ratios, a heavy rare earth shell is formed on the neodymium-iron-boron main phase particles, and at the same time the fluidity of the neodymium-rich phase is improved, thereby improving the intrinsic coercivity of the magnet while ensuring high remanence. Additionally, the preparation method of the invention is simple and easy, and can be applied in engineering.

### BRIEF DESCRIPTION OF THE DRAWINGS

Fig. 1 shows a TEM image of the main and auxiliary alloy-based neodymium-iron-boron magnet material prepared in Example 3 in the present invention.
Fig. 2 shows an elemental analysis diagram of the main and auxiliary alloy-based neodymium-iron-boron magnet material prepared in Example 1 in the present invention.

### DETAILED DESCRIPTION OF THE INVENTION

The present invention is further illustrated below by means of examples, but the present invention is not limited to the scope of the examples. The experimental methods not indicating specific conditions in the following examples were carried out according to conventional methods and conditions, or were selected according to the product instructions.

### Examples 1-3

(1) Casting Process:
According to the formulations shown in Examples 1-3 in the following Table 1, the main alloy raw material and the auxiliary alloy raw material in the raw material composition for a main and auxiliary alloy-based neodymium-iron-boron magnet material were respectively placed in a vacuum smelting furnace and smelted at a temperature of 1500-1550°C under a vacuum degree of 5×10⁻²Pa. Then, the molten liquid obtained by smelting was casted separately by a strip continuous casting process to obtain main alloy sheets and auxiliary alloy sheets.
(2) Hydrogen Decrepitation Process:
At room temperature, the main alloy sheets and the auxiliary alloy sheets prepared in Step (1) were subjected to hydrogen absorption respectively and then vacuum dehydrogenation treatment at 500-620°C to obtain a coarse pulverized powder.
(3) Pulverization Process:
The coarse pulverized powder obtained in Step (2) was finely pulverized in a jet mill in an atmosphere having an oxygen content of 50 ppm or less to obtain a finely pulverized powder with an average particle size of 1-20 µm.
(4) Shaping Process:
The finely pulverized powder was pressed into a green compact in a press with a magnetic field strength of 1.0-2.0 T, and then kept under a pressure of 260 MPa for 15s to obtain a molded body.
(5) Sintering Process:
The molded body was sintered at a temperature of 1060-1090°C in a sintering atmosphere of a vacuum or argon atmosphere to achieve the neodymium-iron-boron permanent magnet material.

**Table 1 The components and contents (mass%) of the raw material composition for a main and auxiliary alloy-based neodymium-iron-boron magnet material**

| | Elements | Example 1 | Example 2 | Example 3 |
|---|---|---|---|---|
| Main Alloy | LR | 29.5 | 30.0 | 25.2 |
| | Nd | 22.125 | 22.5 | 18.9 |
| | Pr | 7.375 | 7.5 | 6.3 |
| | Y | / | / | / |
| | La | / | / | / |
| | Ce | / | / | / |
| | HR | / | 1.5 | 5.3 |
| | Gd | / | / | / |
| | Dy | / | 1.5 | 4.3 |
| | Tb | / | / | / |
| | Ho | / | / | 1.0 |
| | M | 0.88 | 1.65 | 1.5 |
| | Ga | 0.25 | 0.4 | 0.25 |
| | Al | 0.03 | / | 0.1 |
| | Cu | 0.1 | 0.25 | 0.15 |
| | Co | 0.5 | 1.0 | 1.0 |
| | X | 0.11 | 0.35 | 0.15 |
| | Zr | 0.11 | 0.35 | / |
| | Ti | / | / | 0.15 |
| | Nb | / | / | / |
| | B | 0.98 | 0.97 | 0.97 |
| | Fe | Balance | Balance | Balance |
| Auxiliary Alloy | LR | 30.0 | 25.0 | 20.0 |
| | Nd | 15.0 | / | / |
| | Pr | 15.0 | 25.0 | 20.0 |
| | HR | 15.0 | 20.0 | 20.0 |
| | Dy | / | 20.0 | 20.0 |
| | Tb | 15.0 | / | / |
| | M | / | / | 20.0 |
| | Ga | / | / | 5.0 |
| | Co | / | / | 15.0 |
| | X | 10.0 | 4.5 | 5.0 |
| | Ti | / | / | / |
| | Zr | 10.0 | 4.5 | 5.0 |
| | Hf | / | / | / |
| | Nb | / | / | / |
| | W | / | / | / |
| | Ta | / | / | / |
| | B | 0.5 | 0.5 | 0.4 |
| | Fe | Balance | Balance | Balance |
| Ratio of Main Alloy to Auxiliary Alloy | | 96:4 | 95:5 | 96:4 |

| | | | | |
|---|---|---|---|---|
| Wherein, "/" means that this component is not included. | | | | |

### Effect Example

### (1) Tested by Transmission Electron Microscopy (TEM)

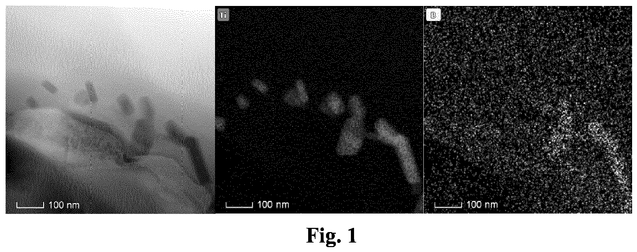

The phase structure of the main and auxiliary alloy-based neodymium-iron-boron magnet material prepared in Example 3 was observed by TEM, and the results are shown in Fig. 1. Fig. 1 shows the element distribution of the Ti-rich region in the grain boundary phase. From this, it can be seen that Ti is closely related to the B element. Combining the phase diagram and thermodynamic calculations, it can be seen that this phase is TiB₂, and Zr, Ti, Hf or the like are elements of the same group, and this phase can be produced in the preparation of neodymium-iron-boron. TiB₂ is a high-temperature ceramic phase, which is stable in a large temperature range, thereby purifying B in the grain boundary, making the neodymium-rich phase more flowable, and providing favorable conditions for the formation of tetragonal Nd₆Fe₁₃Ga and other phases.

### (2) Test for magnetic properties

The magnetic properties of the main and auxiliary alloy-based neodymium-iron-boron magnet materials prepared in Examples 1-3 were tested by using the PFM14.CN Ultra-High Coercivity Permanent Magnet Measuring Instrument from the China Metrology Institute.

**Table 2 The magnetic properties of the main and auxiliary alloy-based neodymium-iron-boron magnet materials**

| No. | Example 1 | Example 2 | Example 3 |
|---|---|---|---|
| Br (kGs) | 14.3 | 13.1 | 12.2 |
| HcJ (kOe) | 18.9 | 24.5 | 30.5 |

| | | | |
|---|---|---|---|
| "Br" refers to remanence, which refers to the magnetism that can be maintained after the permanent magnetic material is magnetized by saturation and then the external magnetic field is removed. Magnetic polarization coercive force H_{cJ} (intrinsic coercivity). | | | |

### (3) Test by FE-EPMA

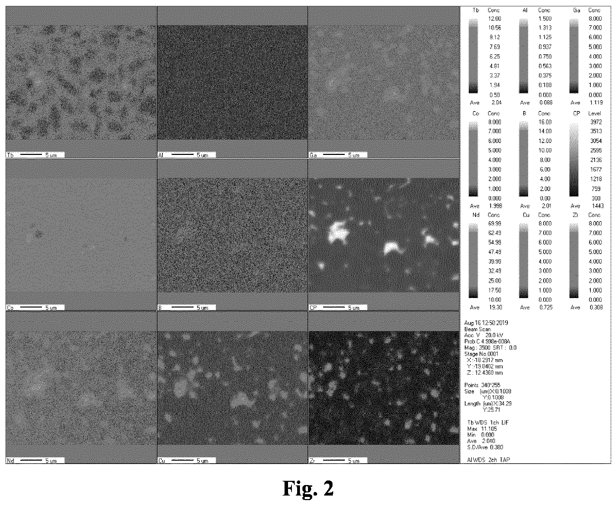

The main and auxiliary alloy-based neodymium-iron-boron magnet material prepared in Example 1 is scanned by FE-EPMA to form elemental analysis diagrams (Tb, Al, Ga, Co, B, CP, Nd, Cu, Zr, and the like), as shown in Fig. 2. It can be seen from Fig. 2 that the heavy rare earth elements such as Tb form an enriched shell in the outer layer of the main phase, and the high-temperature elements such as Zr are evenly distributed in the grain boundary phase, so that the B in the neodymium-rich phase is purified, it is easier to form the tetragonal phase Nd₆Fe₁₃Ga and other antimagnetic phases, both of which jointly increase the coercivity of the magnet.

## Claims

1. A raw material composition for a main and auxiliary alloy-based neodymium-iron-boron magnet material, comprising a main alloy raw material and an auxiliary alloy raw material, wherein:
the main alloy raw material comprises the following components of: 10.0-33.0 mass% of a light rare earth element LR, wherein the LR is one or more selected from the group consisting of Y, La, Ce, Pr and Nd; 0-20.0 mass% of a heavy rare earth element HR, wherein the HR is one or more selected from the group consisting of Gd, Dy, Tb and Ho; 0.1-5.0 mass% of M, wherein the M is one or more selected from the group consisting of Co, Cu, Al and Ga; 0.05-0.7 mass% of X, wherein the X is one or more selected from the group consisting of Zr, Ti and Nb; 0.94-1.1 mass % of B; and Fe as the balance, wherein the mass% refers to the mass percentage of the component in the main alloy raw material;
the auxiliary alloy raw material comprises the following components of: 0-30.0 mass% of a light rare earth element LR, wherein the LR is Nd and/or Pr; 1-80 mass% of a heavy rare earth element HR, wherein the HR is Dy and/or Tb; 5.0-20.0 mass% of M, wherein the M is one or more selected from the group consisting of Co, Cu, Al and Ga; 3.0-12.0 mass% of X, wherein the X is one or more selected from the group consisting of Ti, Zr, Hf, Nb, W and Ta; 0-0.6 mass % of B; and Fe as the balance, wherein the mass% refers to the mass percentage of the component in the auxiliary alloy raw material; and
the mass percentage of the auxiliary alloy raw material in the raw material composition for the main and auxiliary alloy-based neodymium-iron-boron magnet material is 1.0-15.0 mass%.

2. The raw material composition for a main and auxiliary alloy-based neodymium-iron-boron magnet material according to claim 1, **characterized in that**:
the main alloy raw material has a total rare earth content TRE of 26.0-40.0 mass%, preferably 29.0-32.0 mass%, for example, 29.5 mass%, 30.5 mass% or 31.5 mass%, wherein the mass% refers to the mass percentage of the component in the main alloy raw material; and/or
in the main alloy raw material, the content of LR is 25.0-30.0 mass%, for example, 25.2 mass%, 29.5 mass% or 30 mass%, wherein the mass% refers to the mass percentage of the component in the main alloy raw material; and/or
in the main alloy raw material, when the LR comprises Nd, the content of Nd is 18.9-22.5 mass%, such as 22.125 mass%; when the LR comprises Pr, the content of Pr is 6.0-7.5 mass%, such as 6.3 mass% or 7.375 mass%, wherein the mass% refers to the mass percentage of the component in the main alloy raw material; and/or
in the main alloy raw material, the LR comprises Nd and Pr; more preferably, the content of Nd is 22.125 mass%, and the content of Pr is 7.375 mass%; or, the content of Nd is 22.5 mass%, and the content of Pr is 7.5 mass%; or, the content of Nd is 18.9 mass%, and the content of Pr is 6.3 mass%, wherein the mass% refers to the mass percentage of the component in the main alloy raw material; and/or
in the main alloy raw material, the content of the HR is 1.0-10.0 mass%, for example, 1.5 mass% or 5.3 mass%, wherein the mass% refers to the mass percentage of the component in the main alloy raw material; and/or
in the main alloy raw material, when the HR comprises Dy, the content of Dy is 1.0-5.0 mass%, for example, 1.5 mass% or 4.3 mass%; preferably, in the main alloy raw material, the HR is Dy; the content of Dy is preferably 1.5 mass%; when the HR comprises Ho, the content of Ho is 0.5-2.0 mass%, for example, 1.0 mass%, wherein the mass% refers to the mass percentage of the component in the main alloy raw material; and/or
in the main alloy raw material, the HR comprises Dy and Ho, wherein the content of Dy is preferably 4.3 mass%, and the content of Ho is preferably 1.0 mass%, wherein the mass% refers to the mass percentage of the component in the main alloy raw material; and/or
in the main alloy raw material, the content of M is 0.5-2.0 mass%, for example, 0.88 mass%, 1.5 mass% or 1.65 mass%, wherein the mass% refers to the mass percentage of the component in the main alloy raw material; and/or
in the main alloy raw material, when the M comprises Ga, the content of Ga is 0.2-0.4 mass%, for example, 0.25 mass%; when the M contains Al, the content of Al is 0.01-0.1 mass%, for example, 0.03 mass%; when the M contains Cu, the content of Cu is 0.1-0.25 mass%, for example, 0.15 mass%; when the M contains Co, the content of Co is 0.5-1.0 mass%, wherein the mass% refers to the mass percentage of the component in the main alloy raw material; and/or
in the main alloy raw material, the M comprises Ga, Al, Cu and Co, wherein, the content of Ga is preferably 0.25 mass%, the content of Al is preferably 0.03 mass%, the content of Cu is preferably 0.1 mass%, and the content of Co is preferably 0.5 mass%, wherein the mass% refers to the mass percentage of the component in the main alloy raw material; and/or
in the main alloy raw material, the content of X is 0.1-0.35 mass%, for example, 0.11 mass% or 0.15 mass%, wherein the mass% refers to the mass percentage of the component in the main alloy raw material; and/or
in the main alloy raw material, the X is Zr or Ti; and/or
in the main alloy raw material, the content of B is 0.97-0.99 mass%, for example, 0.98 mass%, wherein the mass% refers to the mass percentage of the component in the main alloy raw material.

3. The raw material composition for a main and auxiliary alloy-based neodymium-iron-boron magnet material according to claim 1, **characterized in that**:
the main alloy raw material comprises the following components of: 22.125 mass% of Nd; 7.375 mass% of Pr; 0.25 mass% of Ga; 0.03 mass% of Al; 0.1 mass% of Cu; 0.5 mass% of Co; 0.11 mass% of Zr; 0.98 mass% of B; and Fe as the balance, wherein the mass% refers to the mass percentage of the component in the main alloy raw material; or
the main alloy raw material comprises the following components of: 22.5 mass% of Nd; 7.5 mass% of Pr; 1.5 mass% of Dy; 0.4 mass% of Ga; 0.25 mass% of Cu; 1.0 mass% of Co; 0.35 mass% of Zr; 0.97 mass% of B; and Fe as the balance, wherein the mass% refers to the mass percentage of the component in the main alloy raw material; or
the main alloy raw material comprises the following components of: 18.9 mass% of Nd; 6.3 mass% of Pr; 4.3 mass% of Dy; 1.0 mass% of Ho; 0.25 mass% of Ga; 0.1 mass% of Al; 0.15 mass% of Cu; 1.0 mass% of Co; 0.15 mass% of Ti; 0.97 mass% of B; and Fe as the balance, wherein the mass% refers to the mass percentage of the component in the main alloy raw material.

4. The raw material composition for a main and auxiliary alloy-based neodymium-iron-boron magnet material according to claim 1, **characterized in that**:
the auxiliary alloy raw material has a total rare earth content TRE of 35.0-50.0 mass%, preferably 40.0-45.0 mass%, wherein the mass% refers to the mass percentage of the component in the auxiliary alloy raw material; and/or
in the auxiliary alloy raw material, the content of LR is 20.0-30.0 mass%, for example, 25.0 mass%, wherein the mass% refers to the mass percentage of the component in the auxiliary alloy raw material; and/or
in the auxiliary alloy raw material, when the LR comprises Nd, the content of Nd is 10.0-20.0 mass%, for example, 15.0 mass%; when the LR comprises Pr, the content of Pr is 15.0-25.0 mass%, for example, 20.0 mass%, wherein the mass% refers to the mass percentage of the component in the auxiliary alloy raw material; and/or
in the auxiliary alloy raw material, the LR is Nd and Pr, the content of Nd is 15.0 mass%, and the content of Pr is 15.0 mass%, wherein the mass% refers to the mass percentage of the component in the auxiliary alloy raw material; and/or
in the auxiliary alloy raw material, the content of HR is 15.0-20.0 mass%, wherein the mass% refers to the mass percentage of the component in the auxiliary alloy raw material, and/or
in the auxiliary alloy raw material, the HR is Tb, and the content of Tb is 15.0 mass%, wherein the mass% refers to the mass percentage of the component in the auxiliary alloy raw material, and/or
in the auxiliary alloy raw material, the HR is Dy, and the content of Dy is 20.0 mass%, wherein the mass% refers to the mass percentage of the component in the auxiliary alloy raw material, and/or
in the auxiliary alloy raw material, when the M comprises Ga, the content of Ga is 2.0-10.0 mass%, for example, 5.0 mass%; when the M comprises Co, the content of Co is 10.0-20.0 mass%, for example, 15.0 mass%; wherein the mass% refers to the mass percentage of the component in the auxiliary alloy raw material, and/or
in the auxiliary alloy raw material, the M is Ga and Co; wherein, the content of Ga is preferably 5.0 mass%, the content of Co is preferably 15.0 mass%, wherein the mass% refers to the mass percentage of the component in the auxiliary alloy raw material, and/or
in the auxiliary alloy raw material, the content of X is 4.0-10.0 mass%, for example, 4.5 mass% or 5.0 mass%, wherein the mass% refers to the mass percentage of the component in the auxiliary alloy raw material; preferably, in the auxiliary alloy raw material, the X is Zr; and/or
in the auxiliary alloy raw material, the content of B is 0.3-0.6 mass%, for example, 0.4 mass% or 0.5 mass%, wherein the mass% refers to the mass percentage of the component in the auxiliary alloy raw material, and/or
the mass percentage of the auxiliary alloy raw material in the raw material composition for a main and auxiliary alloy-based neodymium-iron-boron magnet material is 2.0-5.0 mass%, for example, 4.0 mass%.

5. The raw material composition for a main and auxiliary alloy-based neodymium-iron-boron magnet material according to claim 1, **characterized in that**:
the auxiliary alloy raw material comprises the following components of: 15.0 mass% of Nd; 15.0 mass% of Pr; 15.0 mass% of Tb; 10.0 mass% of Zr; 0.5 mass% of B; and Fe as the balance, wherein the mass% refers to the mass percentage of the component in the auxiliary alloy raw material; and/or
the auxiliary alloy raw material comprises the following components of: 25.0 mass% of Pr; 20.0 mass% of Dy; 4.5 mass% of Zr; 0.5 mass% of B; and Fe as the balance, wherein the mass% refers to the mass percentage of the component in the auxiliary alloy raw material; and/or
the auxiliary alloy raw material comprises the following components of: 20.0 mass% of Pr; 20.0 mass% of Dy; 5.0 mass% of Ga; 15.0 mass% of Co; 5.0 mass% of Zr; 0.4 mass% of B; and Fe as the balance, wherein the mass% refers to the mass percentage of the component in the auxiliary alloy raw material.

6. The raw material composition for a main and auxiliary alloy-based neodymium-iron-boron magnet material according to claim 1, **characterized in that**:
the raw material composition for a main and auxiliary alloy-based neodymium-iron-boron magnet material comprises a main alloy raw material and an auxiliary alloy raw material, wherein: the main alloy raw material comprises the following components of: 22.125 mass% of Nd; 7.375 mass% of Pr; 0.25 mass% of Ga; 0.03 mass% of Al; 0.1 mass% of Cu; 0.5 mass% of Co; 0.11 mass% of Zr; 0.98 mass% of B; and Fe as the balance, wherein the mass% refers to the mass percentage of the component in the main alloy raw material; the auxiliary alloy raw material comprises the following components of: 15.0 mass% of Nd; 15.0 mass% of Pr; 15.0 mass% of Tb; 10.0 mass% of Zr; 0.5 mass% of B; and Fe as the balance, wherein the mass% refers to the mass percentage of the component in the auxiliary alloy raw material; and the mass percentage of the auxiliary alloy raw material in the raw material composition for a main and auxiliary alloy-based neodymium-iron-boron magnet material is 4.0 mass%; or
the raw material composition for a main and auxiliary alloy-based neodymium-iron-boron magnet material comprises a main alloy raw material and an auxiliary alloy raw material, wherein: the main alloy raw material comprises the following components of: 22.5 mass% of Nd; 7.5 mass% of Pr; 1.5 mass% of Dy; 0.4 mass% of Ga; 0.25 mass% of Cu; 1.0 mass% of Co; 0.35 mass% of Zr; 0.97 mass% of B; and Fe as the balance, wherein the mass% refers to the mass percentage of the component in the main alloy raw material; the auxiliary alloy raw material comprises the following components of: 25.0 mass% of Pr; 20.0 mass% of Dy; 4.5 mass% of Zr; 0.5 mass% of B; and Fe as the balance, wherein the mass% refers to the mass percentage of the component in the auxiliary alloy raw material; and the mass percentage of the auxiliary alloy raw material in the raw material composition for a main and auxiliary alloy-based neodymium-iron-boron magnet material is 5.0 mass%; or
the raw material composition for a main and auxiliary alloy-based neodymium-iron-boron magnet material comprises a main alloy raw material and an auxiliary alloy raw material, wherein: the main alloy raw material comprises the following components of: 18.9 mass% of Nd; 6.3 mass% of Pr; 4.3 mass% of Dy; 1.0 mass% of Ho; 0.25 mass% of Ga; 0.1 mass% of Al; 0.15 mass% of Cu; 1.0 mass% of Co; 0.2 mass% of Zr; 0.97 mass% of B; and Fe as the balance, wherein the mass% refers to the mass percentage of the component in the main alloy raw material; the auxiliary alloy raw material comprises the following components of: 20.0 mass% of Pr; 20.0 mass% of Dy; 5.0 mass% of Ga; 15.0 mass% of Co; 5.0 mass% of Zr; 0.4 mass% of B; and Fe as the balance, wherein the mass% refers to the mass percentage of the component in the auxiliary alloy raw material; and the mass percentage of the auxiliary alloy raw material in the raw material composition for a main and auxiliary alloy-based neodymium-iron-boron magnet material is 4.0 mass%.

7. A preparation method of a main and auxiliary alloy-based neodymium-iron-boron magnet material, comprising the following steps of:
S1: subjecting the main alloy raw material and the auxiliary alloy raw material in the raw material composition for a main and auxiliary alloy-based neodymium-iron-boron magnet material according to any one of claims 1-6 to smelting and then casting respectively, to obtain a main alloy and an auxiliary alloy respectively;
S2: subjecting the main alloy and the auxiliary alloy to hydrogen decrepitation and pulverization respectively, mixing the pulverized main alloy and the auxiliary alloy to produce a mixture, and shaping and sintering the mixture, to obtain the main and auxiliary alloy-based neodymium-iron-boron magnet material.

8. The preparation method of a main and auxiliary alloy-based neodymium-iron-boron magnet material according to claim 7, **characterized in that**:
the smelting is carried out in a smelting furnace having a vacuum degree of about 5×10⁻²Pa and a smelting temperature of 1300°C-1600°C, preferably 1500°C-1550°C; and/or
the process for the casting is a strip continuous casting process, an ingot casting process, a centrifugal casting process, or a rapid quenching process; and/or
the hydrogen decrepitation has a dehydrogenation temperature of 400°C-650°C, for example, 500-620°C; and/or
the pulverization is carried out in a jet mill; and/or
the pulverization is carried out in an oxygen-containing atmosphere, wherein the oxygen content in the oxygen-containing atmosphere is preferably 80 ppm or less, more preferably 50 ppm or less; and/or
the particles after the pulverization have a diameter of 1-20 µm; and/or
the shaping comprises pressing into a green compact in a press with a magnetic field strength of preferably 0.5T-3.0T, for example, 1.0-2.0T, at a pressing pressure of preferably 200-300 MPa, for example, 260 MPa, for a pressing time of preferably 3-30s, for example, 15s; and/or
the temperature for the sintering is 1000°C-1150°C, preferably, 1060-1090°C; and/or
the time for the sintering is 4-20 hours; and/or
the atmosphere for the sintering is vacuum or argon atmosphere.

9. A main and auxiliary alloy-based neodymium-iron-boron magnet material prepared according to the preparation method of a main and auxiliary alloy-based neodymium-iron-boron magnet material according to claim 7 or 8.

10. The main and auxiliary alloy-based neodymium-iron-boron magnet material according to claim 9, **characterized by** comprising a main phase and a grain boundary phase, wherein the main phase is a core-shell structure, wherein: the core is LR₂T₁₄B, and the shell is HR₂T₁₄B; the grain boundary phase comprises a neodymium-rich phase, a XB₂ phase and a R₆T₁₃M phase; wherein R is LR and/or HR; LR is one or more selected from the group consisting of Y, La, Ce, Pr, and Nd; HR is one or more selected from the group consisting of Gd, Dy, Tb and Ho; M is one or more selected from the group consisting of Cu, Al and Ga; X is one or more selected from the group consisting of Ti, Zr, Hf, Nb, W and Ta; and T is Fe and/or Co;
preferably, in the main and auxiliary alloy-based neodymium-iron-boron magnet material, LR is Pr and Nd; HR is Tb; M is Cu, Al and Ga; X is Zr; and T is Fe and Co;
preferably, in the main and auxiliary alloy-based neodymium-iron-boron magnet material, LR is Pr and Nd; HR is Dy; M is Cu and Ga; X is Zr; and T is Fe and Co;
preferably, in the main and auxiliary alloy-based neodymium-iron-boron magnet material, LR is Pr and Nd; HR is Dy and Ho; M is Cu, Al and Ga; X is Ti; T is Fe and Co.
